# EUROPEAN PATENT APPLICATION

(11) **EP 4 300 886 A1**
(43) Date of publication of application: **03.01.2024**
(21) Application number: 22186537.1
(22) Date of filing: 22.07.2022
(51) Int. Cl.: H04L 9/40, H04W 4/40, H04W 12/0433

(54) **SECURE ELEMENT, TRUSTED AUTHORITY, DEVICE, KEY MANAGEMENT SERVER, BACKEND, METHOD AND COMPUTER PROGRAM**

(30) Priority: 01.07.2022 EP 22182540
(71) Applicant: Bayerische Motoren Werke Aktiengesellschaft, 80809 München (DE)
(72) Inventor: Knott, Thorsten, 83104 Tuntenhausen (DE); Hippler, Marco, 81541 München (DE); Reinhart, Lukas, 85354 Freising (DE)

(57) **Abstract**

Embodiments relate to an eligibility server 830, 970. The eligibility server 830, 970 for improving an authorization process comprises interface circuitry 832 configured to communicate with user equipment 967, a database 980 and a device and processing circuitry 834 configured to control the interface circuitry 832. Further, the processing circuitry is configured to receive, from the device, a signal indicative of account identification information (e.g., a key request). Further, the processing circuitry 834 is configured to receive, from the user equipment 967, a key signing request comprising data indicative of an instance certificate authority of the user equipment 967 and an endpoint certificate of the user equipment 967. The instance certificate authority comprises data indictive of a user binding. Further, the processing circuitry 834 is configured to transmit a verification request to the database 980 for verifying the identity of the user equipment 967.

## Description

The present disclosure relates to the field of digital identity authorization. Embodiments relate to a secure element, a trusted authority, a device, a key management server, a backend, a method and a computer program.

Authorization processes enables a user of a device to enable certain functionality with his device, e.g., validate a bank transfer, validate a generation of a digital key, etc. For example, the use of a digital key enables a user of a vehicle to open it particularly easily. In particular, smart access can be used to configure a user device to act as a digital key for a vehicle. For this purpose, an invitation for a digital key, also called a data key, can be passed on to a friend device by the user device for configuration of the friend device. This allows the friend device to be configured/authenticated in such a way that access, for example opening, starting, etc. of the vehicle is enabled via wireless communication, for example Bluetooth or ultra-wideband technology (UWB).

The Digital Car Key solution currently defined in the Car Connectivity Consortium's (CCC) standard release 3 ([1]) standardizes an access system consisting of
a) a user device, e.g., a smartphone, a tablet, and software that;
   i) carry a digital key embedded in secure storage on the smart device;
   ii) offer interfaces from the secure storage to the smartphone operating system; and
   iii) offer interfaces from the smartphone operating system to other applications running on the smartphone (e.g. an app of an original equipment manufacturer (OEM).
b) a vehicle, allowing a user/owner of a digital key to operate certain vehicle functionalities ; and
c) a backend system, interconnecting the smart device and the vehicle allowing to share and manage digital keys and offer additional services.

Following the CCC standard release 2 ff. digital keys for a particular vehicle can be shared by entities (also referred to as "sharer"/"owner") having appropriate administration rights for that vehicle to entities conforming with the digital key specification that have been whitelisted/certified as recipients by the vehicle OEM (Device certificate authority (CA) signed by a device OEM CA and cross-signed by a vehicle CA).

A key sharing is a multi-step process, in which the sharer first configures the parameters of the digital key to be created ("key creation request") and passes them to the friend device (also referred to as "sharee"). After creation of the key by the sharee and the export of an "endpoint certificate" containing the parameters, the digital key has been created with, the sharer attests that the key has been created according to the key creation request by signing the endpoint certificate with its private key ("key sharing attestation"). However, only a validation of specific key configuration parameters is performed before the attestation is signed by the sharer. Thus, attacks on the sharee or the communication channel used for transmitting the invitation/key creation request can be exploited by an attacker to reroute a digital key to an attacker device.

A currently defined authorization process to prevent these attacks uses a second factor (e.g., vehicle or device entered PIN/One Time Password) that has to be passed from the sharer to the sharee out of band (e.g., via a voice call). However, this may negatively impact a user experience and does not cover all use cases (e.g., app based key deployment by servers). Thus, there may be a need to improve an authorization process between a sharer and a sharee.

It is therefore a finding that an authorization can be improved by using a signal comprising information indicative of a user binding to a secure element (of the sharee). For example, a trusted authority may perform a user binding such that the secure element is associated with a user. For example, the user binding is performed by identifying the secure element of a smartphone of a user as the secure element of the user. This way, an invitation to generate an authorization key can be bounded to a secure element. For example, the sharer can receive information about a secure element (of the sharee) which is associated to a user, e.g., a friend, who should receive a digital key, and can generate and transmit an invitation, which can only be used to generate a signable authorization key by the secure element associated to the friend. Thus, the sharer can check that the key has actually been created by the intended sharee, e.g., on a device associated with the intended recipient.

Examples provide a secure element of a user equipment for improving an authorization process, comprising interface circuitry configured to communicate with a trusted authority and processing circuitry configured to control the interface circuitry and to receive a signal from the trusted authority. The signal comprises information indicative of a user binding to the secure element. This way, a secure element can be associated with a user and/or unique data of the user, e.g., with an identity, a phone number, a bank account and the secure element can be informed about a performed user binding.

In an example, the processing circuitry may be further configured to receive, from a device, an invitation signal comprising information indicative of an invitation to generate an authorization key and to generate an authorization key based on the received signal. The authorization key may be a digital key. This way, an authorization key, e.g., a digital key for a vehicle, can be generated by the secure element. A check of the generated authorization key can be performed by utilizing identification information of the user binding.

Examples provide a trusted authority for improving an authorization process, comprising interface circuitry configured to communicate with a secure element and processing circuitry configured to control the interface circuitry and to receive an identifier signal from the secure element. The identifier signal comprises information indicative of an identifier of the secure element. Further, the processing circuitry is configured to perform a user binding of the secure element. This way, a secure element can be bounded to a distinct user.

In an example, the processing circuitry may be further configured to store information about the user binding in an instance certificate authority certificate. This way, a secure element used for a generation of an authorization key can be checked by using the instance certificate authority certificate.

Examples provide a device for improving an authorization process, comprising interface circuitry configured to communicate with a database and processing circuitry configured to control the interface circuitry. Further, the processing circuitry is configured to transmit a request for identification information of a secure element to the database and receive an identification signal comprising information indicative of the identification information from the database. The identification information may comprise at least one of an identifier of the secure element (e.g., a public key of a key pair (comprising also a private key) generated by the secure element) or a user binding information (e.g., an identifier associated to a user/owner). This way, the device can request identification information from a database, e.g., a trusted authority, which can be used to validate a process of a generation of an authorization key.

In an example, the interface circuitry may be further configured to communicate with a secure element (e.g., a secure element as described above). The processing circuitry may be further configured to transmit to the secure element an invitation signal comprising information indicative of an invitation to generate an authorization key, receive, from the secure element, a key signing request comprising information about a secure element used to generate an authorization key and check whether the information about the secure element matches the identification information and if the information matches indicate the authorization key as valid. This way, the device, e.g., a sharer, can validate a generated authorization key with respect to the secure element used for generating the authorization key.

In an example, the device may further comprise a storage device. The database from which the identification information is to be requested may be stored in the storage device. This way, the device can request the identification information in an eased way, e.g., without needing a wireless connection to an external database such like a server.

In an example, the interface circuitry may be further configured to communicate with a key management server. The processing circuitry may be further configured to transmit, to the key management server, a request to create an invitation signal. The request comprises information indicative of the identification information and receive, from the key management server, a request response signal comprising information indicative for the invitation signal. This way, the task of generating an invitation signal can be shifted to the key management server.

Examples provide a key management server for improving an authorization process, comprising interface circuitry configured to communicate with a secure element as described above and a device as described above and processing circuitry configured to control the interface circuitry. Further, the processing circuitry is configured to receive, from the device, a request to create an invitation signal. The request comprises information indicative of identification information. Further, the processing circuitry is configured to transmit a request response signal comprising information indicative for the invitation signal, receive, from the secure element, a key signing request comprising information about a secure element used to generate an authorization key and compare the secure element information with the identification information. This way, the key management server can perform a signation of the authorization key generated by a secure element.

Examples provide a backend for improving an authorization process, comprising interface circuitry configured to communicate with a secure element as described above and a device as described above and processing circuitry configured to control the interface circuitry. Further, the processing circuitry is configured to receive an identification signal, from the device, comprising information indicative of the identification information from, receive, from the secure element, a key signing request comprising information about a secure element used to generate an authorization key and compare the secure element information with the identification information. This way, the backend can perform a signation of the authorization key generated by a secure element.

Examples provide a method improving an authorization process, comprising transmitting a request for identification information of a secure element to a database and receiving, from the database, an identification signal comprising information indicative of the identification information. The identification information may comprise at least one of an identifier of the secure element (e.g., a public key of a key pair (comprising also a private key) generated by the secure element) or a user binding information. Further, the method comprises receiving, from the secure element, a key signing request comprising information about a secure element used to generate an authorization key and comparing the secure element information with the identification information.

It is a further a finding that a secure sharing can be improved by using an instance CA certificate comprising data indicative of a user binding and an account identification information. The account identification information may be stored in a storage device of a sharer which may allow an easy access to the account identification information.

Examples provide an eligibility server. The eligibility server for improving an authorization process comprises interface circuitry configured to communicate with user equipment, a database and a device and processing circuitry configured to control the interface circuitry. Further, the processing circuitry is configured to receive, from the device, a signal indicative of account identification information (e.g., a key request). Further, the processing circuitry is configured to receive, from the user equipment, a key signing request comprising data indicative of an instance certificate authority of the user equipment and an endpoint certificate of the user equipment. The instance certificate authority comprises data indictive of a user binding. Further, the processing circuitry 834 is configured to transmit a verification request to the database for verifying the identity of the user equipment. This way, the eligibility server can check whether key signing request was received from an intended recipient of a key invitation signal. For this, the account binding may mean that a user equipment is identified to belong to a respective identity of entities. Thus, by the instance CA certificate and the account identification information a secure sharing can be performed.

In an example, the account identification information may comprise data indicative of at least one of a phone number or an email address. This way, the eligibility server can receive data from the sharer which may be easily accessible for the sharer, e.g., stored on the sharer. Thus, a further connection between the sharer and a database can be omitted.

In an example, the processing circuitry may be further configured to receive from the database a return message comprising data indicative of a success or an error of a verification of the identification of the user equipment. This way, the eligibility device can receive information about a verification of the key signing request of the sharee.

Examples provide of a device. The device for improving an authorization process comprises interface circuitry configured to communicate with a database and processing circuitry configured to control the interface circuitry. Further, the processing circuitry is configured to transmit a request for account identification information to the database and to receive an identification signal comprising data indicative of the account identification information from the database, wherein the account identification information is indicative of a user binding. This way, the device can receive data needed for a secure share, e.g., to transmit the data to the eligibility server as described above.

In an example, the processing circuitry may be further configured to transmit, to an eligibility server, a signal comprising data indicative of the account identification information. This way, the device can provide necessary data for signing an authorization key from a sharee.

Examples provide a method (for secure sharing) comprising receiving, from a device, a signal comprising data indicative of account identification information, receiving, from user equipment, a key signing request comprising data indicative of an instance certificate authority of the user equipment and an endpoint certificate of the user equipment. The instance certificate authority comprises data indictive of a user binding. Further, the method comprises transmitting a verification request to the database for verifying the identity of the user equipment. This way, a secure sharing can be performed based on an instance CA certificate and an account binding information.

In an example, the method may further comprise receiving, from the database, a return message comprising data indicative of a success or an error of a verification of the identification of the user equipment. This way, an acknowledgement of the verification request can be received.

Examples provide a method (for secure sharing). The method comprises transmitting a request for account identification information to a database and receiving an identification signal comprising data indicative of the account identification information from the database. The account identification information is indicative of a user binding.

Examples provide an authentication device for improving an authorization process. The authentication device comprises interface circuitry configured to communicate with a database and a user equipment and processing circuitry configured to control the interface circuitry. Further, the processing circuitry is configured to receive an endpoint attestation signal comprising data indicative of an account identification information signed by a sharer and to transmit a verification request to the database.

Some examples of apparatuses, methods and/or computer programs will be described in the following by way of example only, and with reference to the accompanying figures, in which
Fig. 1 shows a block diagram of an example of a secure element;
Fig. 2 shows a block diagram of an example of a trusted authority;
Fig. 3 shows a block diagram of an example of a device;
Fig. 4 shows a block diagram of an example of a key management server;
Fig. 5 shows a block diagram of an example of a backend;
Figs. 6a - 6c show flow diagrams of an example of a method 600 of an authorization key sharing flow;
Fig. 7 shows an example of a method;
Fig. 8 shows an example of a block diagram of an eligibility server;
Fig. 9 shows an example of a flow diagram of a secure sharing using account binding;
Fig. 10 shows another example of a flow diagram of a secure sharing using account binding;
Fig. 11 shows another example of a flow diagram of a secure sharing using account binding;
Fig. 12 shows a method for secure sharing;
Fig. 13 shows another example of a block diagram of a device;
Fig. 14 shows an example of a secure sharing without an eligibility server;
Fig. 15 shows another example of a secure sharing without an eligibility server;
Fig. 16 shows another example of a secure sharing without an eligibility server;
Fig. 17 shows a method for secure sharing; and
Fig. 18 shows an example of block diagram of an authentication device for improving an authorization process.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

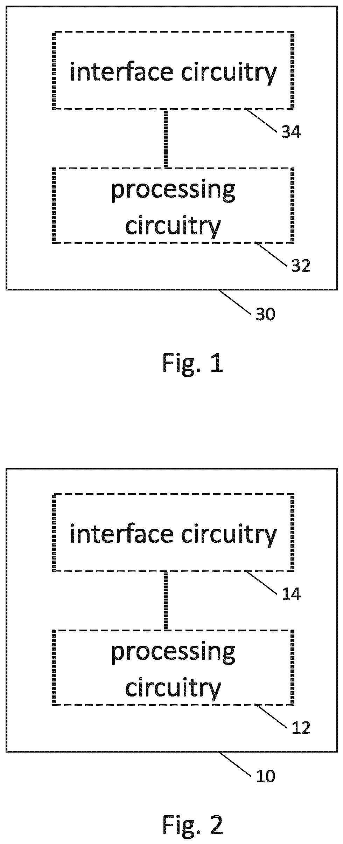

Fig. 1 shows a block diagram of an example of a secure element 30. The secure element 30 of a user equipment for improving an authorization process comprises interface circuitry 32 configured to communicate with a trusted authority and processing circuitry 34 configured to control the interface circuitry and to receive a signal from the trusted authority. The signal comprises information indicative of a user binding to the secure element 30. This way, a secure element 30 can be associated with a user and/or unique data of the user, e.g., with an identity, a phone number, a bank account and the secure element 30 can be informed about a performed user binding.

For example, the user binding may be a binding process wherein a user of the secure element 30, e.g., a user of the user equipment comprising the secure element 30, e.g., a sharee, may be bound to the secure element 30. For example, the user binding may allow a distinct identification of a user of the user equipment. For example, during a user binding a key pair (e.g., comprising a public key and a private key) may be generated in the secure element 30. The secure element may transmit the public key to a trusted authority. The trusted authority may generate a certificate to indicate that the public key (and the corresponding private key) was generated by the processing circuitry 34 of the secure element 30.

A user of the user equipment may be an owner of the user equipment. Optionally or alternatively a user of the user equipment can be a person who can use the user equipment, e.g., by unlock the user device, storing personal information on the user equipment. For example, a plurality of persons can be assigned as user for the user equipment. In this case, the user binding would comprise information about each person of the plurality of persons.

For example, to perform a user binding a unique information about the user of the user equipment may be needed, e.g., a mail address, a phone number, an identity certificate. With this information the secure element 30 of the user equipment can be assigned by the user binding to the user. Thus, the user binding may allow a distinct identification of a user (or a plurality of users), e.g., an owner, of the user equipment.

Therefore, by utilizing the user binding a secure element 30 can be assigned to a user and a check can be performed if a secure element 30 used for generating an authorization key is a secure element 30, which was intended to generate the authorization key. Further, by transmitting the receiving signal from the trusted authority the user equipment can be informed about a performed user binding. This way, the user equipment may be enabled to generate an authorization key, when receiving an invitation signal comprising information indicative of an invitation to generate an authorization key.

In an example, the processing circuitry 34 may be further configured to receive, from a device, an invitation signal comprising information indicative of an invitation to generate an authorization key and to generate an authorization key based on the received signal. The authorization key may be a digital key. This way, an authorization key, e.g., a digital key for a vehicle, can be generated by the secure element 30.

For example, the user equipment may be a communication device within the meaning of the respective communication standards being used for mobile communication, e.g., a mobile phone, such as a smartphone, or another type of mobile communication device, such as a smartwatch, a laptop computer, a tablet computer, or autonomous augmented-reality glasses.

As shown in Fig. 1 the respective interface circuitry 32 is coupled to the respective processing circuitry 34 at the secure element 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the secure element 30 may comprise a memory and at least one processing circuitry 34 operably coupled to the memory.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The secure element 30 may be a microprocessor, graphics processor unit (GPU), application-specific integrated circuit (ASICs), integrated circuits (IC), etc.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 18).

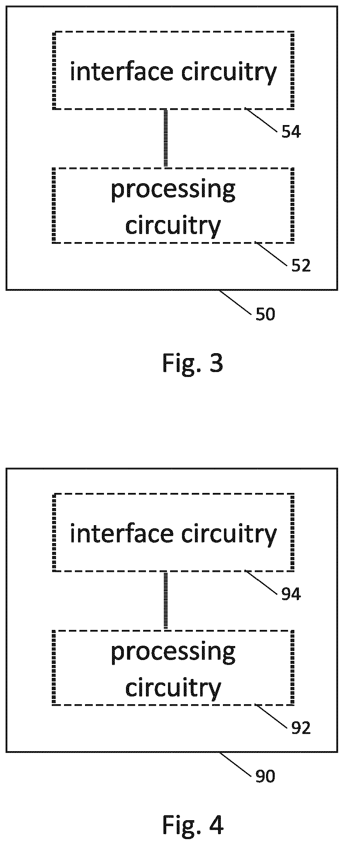

Fig. 2 shows a block diagram of an example of a trusted authority 10. The trusted authority 10 for improving an authorization process comprises interface circuitry 12 configured to communicate with a secure element and processing circuitry 14 configured to control the interface circuitry 12 and to receive an identifier signal from the secure element. The identification information may comprise at least one of an identifier of the secure element (e.g., a public key of a key pair (comprising also a private key) generated by the secure element) or a user binding information. Further, the processing circuitry 14 is configured to perform a user binding of the secure element. This way, the user binding of the secure element can be performed by the trusted authority 10. By sharing the information about the user binding, the trusted authority 10 can enable a device (e.g., as described with respect to fig. 3) to check whether a secure element was intended to generate an authorization key (e.g., by transmitting an invitation signal to the intended secure element) or not (e.g., because an invitation signal was redirected or forwarded). The trusted authority 10 (also known as trusted third party) may be an entity, e.g., a server, a backend, a device which facilitates interactions between two parties, e.g., the device of fig. 3 and the secure element of fig. 1, who both trust the third party.

In an example, the processing circuitry 14 may be further configured to store information about the user binding in an instance certificate authority certificate. The instance CA certificate may comprise an identifier of a user of the user equipment. The identifier may be associated to information allowing an identification of an owner of a secure element, such like an email-address, a telephone number, an id card. The identifier may be obtained by user account binding. The user account binding may be performed by the processing circuitry 14 before performing the user binding. For example, the identifier from the user account binding may be used for the user binding, e.g., to associate the public key received from the secure element with the identifier, e.g., an information allowing to identify an owner of the secure element. For example, the user account binding may be performed by the processing circuitry 14 based on information of the user, e.g., email-address, a telephone number, an id card by generating an identifier allowing an association to the user. This way, a secure element used for a generation of an authorization key can be checked by using the instance CA certificate. The instance CA certificate may comprise the identifier (information related to the user) and the public key of the secure element.

For example, in the context of a digital key for vehicles the information about the user binding can be incorporated into the instance CA certificate described in [3], e.g., in Figure 6-5: Key Creation Data Transfer to Device. The instance CA certificate may be signed by the device OEM CA, as described in the Listing 15-15 in [1]. This way, the trusted authority 10 can incorporate the information of the user binding of the secure element to the user into the instance CA certificate known from [1]. Thus, the (new) instance CA certificate can be utilized to check whether an authorization key was generated by an intended user (bounded to a secure element) or not.

Optionally, the trusted authority 10 may communicate the information about the user binding, e.g., the instance CA certificate, to other entity, e.g., a backend, a smartphone, etc., to allow for the other entity to act as trusted authority 10, e.g., using a whitelist comprising the information received from the trusted authority 10. This way, the other entity can be configured in advance, e.g., by storing a whitelist of secure elements with associated users.

As shown in Fig. 2 the respective interface circuitry 12 is coupled to the respective processing circuitry 14 at the trusted authority 10. In examples the processing circuitry 14 may be implemented using one or more processing units, one or more processing devices, any means for processing, such as a processor, a computer or a programmable hardware component being operable with accordingly adapted software. Similar, the described functions of the processing circuitry 14 may as well be implemented in software, which is then executed on one or more programmable hardware components. Such hardware components may comprise a general-purpose processor, a Digital Signal Processor (DSP), a micro-controller, etc. The processing circuitry 14 is capable of controlling the interface circuitry 12, so that any data transfer that occurs over the interface circuitry 12 and/or any interaction in which the interface circuitry 12 may be involved may be controlled by the processing circuitry 14.

In an embodiment the trusted authority 10 may comprise a memory and at least one processing circuitry 14 operably coupled to the memory and configured to perform the below mentioned method.

In examples the interface circuitry 12 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 12 may be wireless or wireline and it may be configured to communicate, e.g., transmit or receive signals, information with further internal or external components.

The trusted authority 10 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 18).

Fig. 3 shows an example of a block diagram of a device 50. The device 50 for improving an authorization process comprises interface circuitry 52 configured to communicate with a database and processing circuitry 54 configured to control the interface circuitry 52. Further, the processing circuitry 54 is configured to transmit a request for identification information of a secure element to the database and receive an identification signal comprising information indicative of the identification information from the database. The identification information may comprise at least one of an identifier of the secure element (e.g., a public key of a key pair (comprising also a private key) generated by the secure element) or a user binding information. The identifier of the secure element can be a public key generated by the secure element in a key pair with a private key. The user binding information may comprise information of a performed user binding, e.g., performed by a trusted authority as described with reference to fig. 2. Thus, by incorporating the user binding information into the signal the device 50, e.g., a sharer, can be enabled to check whether an authorization key was generated by an intended secure element, e.g., the secure element as described with reference to Fig. 1.

For example, the device can be a communication device within the meaning of the respective communication standards being used for mobile communication, e.g., a mobile phone, such as a smartphone, or another type of mobile communication device, such as a smartwatch, a laptop computer, a tablet computer, or autonomous augmented-reality glasses. Alternatively, the device can be a server such like a backend.

The database may be an identity management database. The identity management database can be implemented by, e.g., a device OEM of the device 50 or a third party. For the identity management database user information (e.g. email address, phone number, identity certificate, etc.) can be mapped to an account id. This way, a distinct assignment of a user to a secure element can be provided. This database can be used for a specific use case, e.g., for the generation of an authorization key such like a digital key for a vehicle. Optionally, an existing identity management database can be reused, e.g., by extending the database by incorporating a new account id. For example, a user may have bought a smartphone with a secure element. Information about the smartphone and an assigned user (e.g., determined by a user binding) may be stored in the identity management database. Thus, the database can be used to introduce identification information, e.g., an accountId, specific to the use case (e.g., a digital car key generation for a vehicle).

The database can be comprised by or can be a trusted authority, e.g., as described with reference to fig. 2. Alternatively, the database can be stored on a smartphone, in a backend, e.g., to act as a whitelist.

The device 50 can request the identification information from the database. Thus, the identification information can be requested by the device 50 on demand. For example, a user of the device 50, e.g., a sharer, may want to provide a friend access to a vehicle, such that a generation of an authorization key, e.g., a digital key, may be required. Thus, before transmitting an invitation signal to a user equipment of the friend, e.g., a sharee, the sharer 50 may request an account id token (e.g., a onetimeAccountIdHash) from the identity management database. The requested account id token may be associated to an intended use case (e.g., the generation of a digital car key for vehicle). The request may be transmitted through a trusted channel. The sharer 50 may receive the account id of the sharee, especially of the secure element of the sharee, which could be used after receiving a generated digital key from the sharee to sign the received digital key. This way, the sharer 50 can check the generated digital key before signing the digital key based on the user binding information of the secure element. Thus, a check whether the digital key was generated by an intended sharee can be performed.

After receiving the identification signal the sharer 50 may initiate a key sharing flow comprising a generation of a digital key. The key sharing flow may be performed according to figure 11-1: Detail of Key Sharing Flow Between Owner and Friend Device After Channel is Established in [1].

In an example, the interface circuitry may be further configured to communicate with a secure element (e.g., a secure element as described with reference to fig. 1). The processing circuitry 54 may be further configured to transmit to the secure element an invitation signal comprising information indicative of an invitation to generate an authorization key, receive, from the secure element, a key signing request comprising information about a secure element used to generate an authorization key and check whether the information about the secure element matches the identification information and if the information matches indicate the authorization key as valid.

The invitation signal may be identical to step 3. Send invitation=urlLink and receive the key signing request may be identical to step 6. UpdateMailbox(payload=sharingKeySigningRequest, notificationToken) from figure 11-1 in [1]. Thus, the process from sending the invitation signal to the sharee to receiving the generated digital key from at the sharer 50 may be identical to the process described in [1].

Additionally, before signing the key signing request, the sharer 50 may verify that the sharee's instanceCA certificate has been signed by the database, e.g., a device OEM CA that was cross signed by the vehicle OEM. This way, the sharer 50 can check that the accountID in the sharee's instanceCA cert matches the account Id of the intended recipient. Thus, only an authorization key generated by the intended sharee could be signed by the sharer 50. A forwarded invitation signal which was received by a further secure element, not comprising the correct user binding (and thus not associated to the instance CA certificate of the database) could therefore not lead to a generation of an authorization key, which would be signed by the sharer 50, since the information received from the database would not match the information received from the key signing request. This way, unsure communication between different devices can be additionally secured by using the secure element which is harder to attack than the communication channel or the device alone.

In an example, the device 50 may further comprise a storage device. The database from which the identification information is to be requested may be stored in the storage device. Thus, a third party can utilize the information generated by the user binding. For example, user binding for digital key deployment by third party apps installed on the smart device of a sharer, e.g. car sharing apps, can utilize the identification information, e.g., generated by a trusted authority. The third party app could generate and retrieve the instance CA certificate through a dedicated application programming interface (API) in the smartphone's operating system from the database. Further, the third party app may link this instance CA certificate to the apps a user account. Whenever an authorization key is to be deployed to the device that the third party app is installed to, either the instance CA certificate or the accountID could be used to ensure the authorization keys are deployed on the correct device.

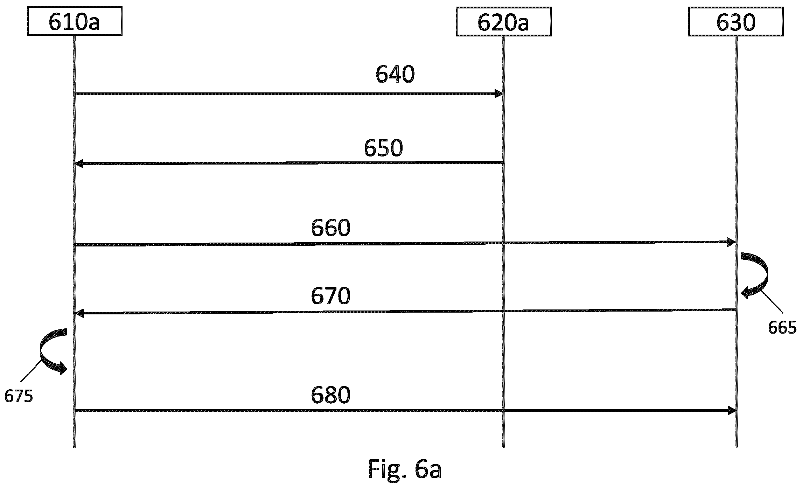

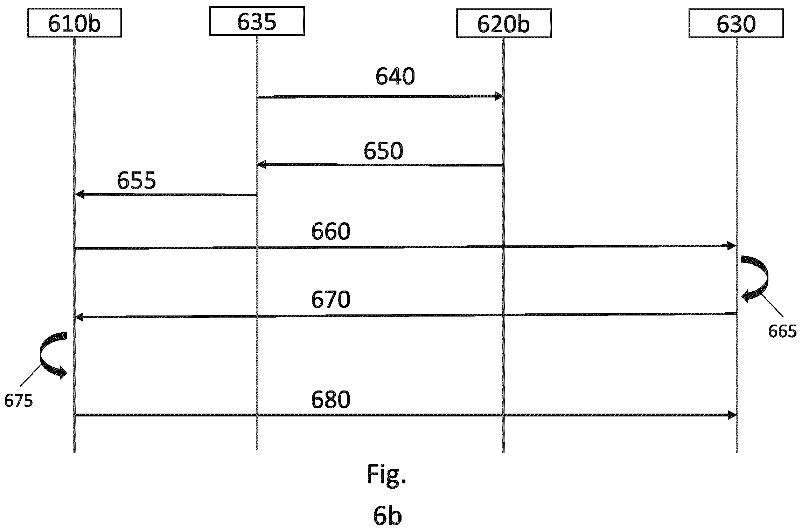

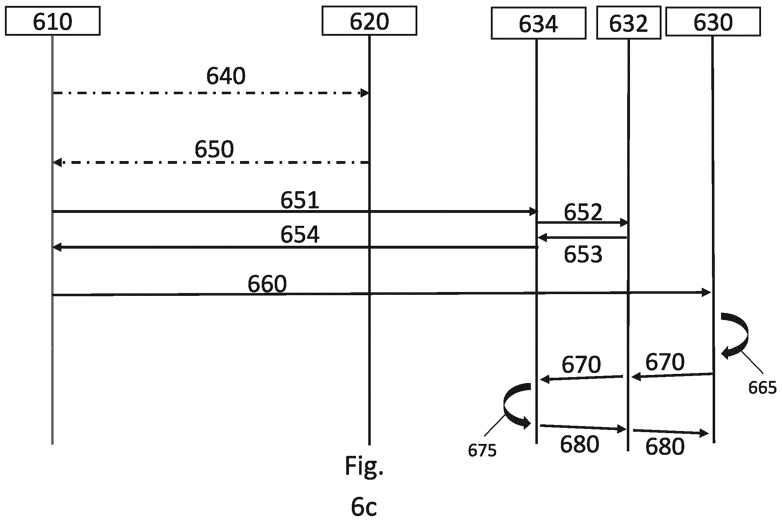

In an example, the interface circuitry may be further configured to communicate with a key management server. The processing circuitry 54 may be further configured to transmit, to the key management server, a request to create an invitation signal. The request comprises information indicative of the identification information and receive, from the key management server, a request response signal comprising information indicative for the invitation signal. This way, the task of generating an invitation signal can be shifted to the key management server (see also fig. 6).

Alternatively, in order to provide sufficient privacy, instead of using accountIDs, a use case specific accountID hash values and one time account ID hash values calculated from account ID and nonces could be used. This way, a privacy could be increased.

As shown in Fig. 3 the respective interface circuitry 52 is coupled to the respective processing circuitry 54 at the trusted authority 50. In examples the processing circuitry 54 may be implemented using one or more processing units, one or more processing devices, any means for processing, such as a processor, a computer or a programmable hardware component being operable with accordingly adapted software. Similar, the described functions of the processing circuitry 54 may as well be implemented in software, which is then executed on one or more programmable hardware components. Such hardware components may comprise a general-purpose processor, a Digital Signal Processor (DSP), a micro-controller, etc. The processing circuitry 54 is capable of controlling the interface circuitry 52, so that any data transfer that occurs over the interface circuitry 52 and/or any interaction in which the interface circuitry 52 may be involved may be controlled by the processing circuitry 54.

In an embodiment the trusted authority 50 may comprise a memory and at least one processing circuitry 54 operably coupled to the memory and configured to perform the below mentioned method.

In examples the interface circuitry 52 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 52 may be wireless or wireline and it may be configured to communicate, e.g., transmit or receive signals, information with further internal or external components.

The trusted authority 50 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4 - 18).

Fig. 4 shows a block diagram of an example of key management server 90. The key management server 90 for improving an authorization process comprises interface circuitry 92 configured to communicate with a secure element, e.g., as described with reference to fig. 1 and a device, e.g., as described with reference to fig. 3, and processing circuitry 94 configured to control the interface circuitry 92. Further, the processing circuitry 94 is configured to receive, from the device, a request to create an invitation signal. The request comprises information indicative of identification information. Further, the processing circuitry 94 is configured to transmit a request response signal comprising information indicative for the invitation signal, receive, from the secure element, a key signing request comprising information about a secure element used to generate an authorization key and compare the secure element information with the identification information. This way, the key management server can perform a signation of the authorization key generated by a secure element. Thus, not the device, e.g., a sharer, alone as described with reference to fig. 3 may sign the authorization. Moreover, the key management server 90 is enabled to check whether an authorization key was generated by an intended secure element of a sharee. Further, if the check matches the key management server can sign the generated authorization key.

As shown in Fig. 4 the respective interface circuitry 92 is coupled to the respective processing circuitry 94 at the key management server 90. In examples the processing circuitry 94 may be implemented using one or more processing units, one or more processing devices, any means for processing, such as a processor, a computer or a programmable hardware component being operable with accordingly adapted software. Similar, the described functions of the processing circuitry 94 may as well be implemented in software, which is then executed on one or more programmable hardware components. Such hardware components may comprise a general-purpose processor, a Digital Signal Processor (DSP), a micro-controller, etc. The processing circuitry 94 is capable of controlling the interface circuitry 92, so that any data transfer that occurs over the interface circuitry 92 and/or any interaction in which the interface circuitry 92 may be involved may be controlled by the processing circuitry 94.

In an embodiment the key management server 90 may comprise a memory and at least one processing circuitry 94 operably coupled to the memory and configured to perform the below mentioned method.

In examples the interface circuitry 92 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 92 may be wireless or wireline and it may be configured to communicate, e.g., transmit or receive signals, information with further internal or external components.

The key management server 90 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

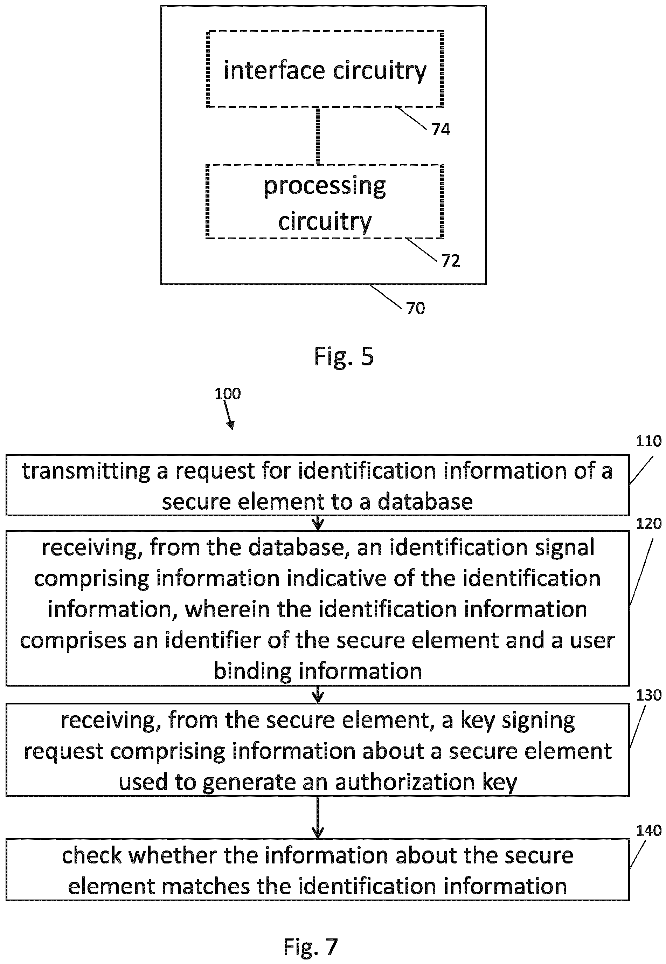

More details and aspects are mentioned in connection with the embodiments described above and/or below. The example shown in Fig. 4 may comprise one or more optional additional features corresponding to one or more aspects mentioned in connection with the proposed concept or one or more examples described above (e.g., Fig. 1 - 3) and/or below (e.g., Fig. 5 - 18).

Fig. 5 shows a block diagram of an example of a backend 70. The backend 70 for improving an authorization process comprises interface circuitry 72 configured to communicate with a secure element, e.g., as described with reference to fig. 1 and a device, e.g., as described with reference to fig. 3, and processing circuitry 74 configured to control the interface circuitry 72. Further, the processing circuitry 74 is configured to receive an identification signal, from the device, comprising information indicative of the identification information from, receive, from the secure element, a key signing request comprising information about a secure element used to generate an authorization key and compare the secure element information with the identification information. This way, the backend 70 can perform a signation of the authorization key generated by a secure element. For example, the backend may be an alternative to the key management server as described above.

As shown in Fig. 5 the respective interface circuitry 72 is coupled to the respective processing circuitry 74 at the backend 70. In examples the processing circuitry 74 may be implemented using one or more processing units, one or more processing devices, any means for processing, such as a processor, a computer or a programmable hardware component being operable with accordingly adapted software. Similar, the described functions of the processing circuitry 74 may as well be implemented in software, which is then executed on one or more programmable hardware components. Such hardware components may comprise a general-purpose processor, a Digital Signal Processor (DSP), a micro-controller, etc. The processing circuitry 74 is capable of controlling the interface circuitry 72, so that any data transfer that occurs over the interface circuitry 72 and/or any interaction in which the interface circuitry 72 may be involved may be controlled by the processing circuitry 74.

In an embodiment the backend 70 may comprise a memory and at least one processing circuitry 74 operably coupled to the memory and configured to perform the below mentioned method.

In examples the interface circuitry 72 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 72 may be wireless or wireline and it may be configured to communicate, e.g., transmit or receive signals, information with further internal or external components.

The backend 70 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described above and/or below. The example shown in Fig. 5 may comprise one or more optional additional features corresponding to one or more aspects mentioned in connection with the proposed concept or one or more examples described above (e.g., Fig. 1 - 4) and/or below (e.g., Fig. 6 - 18).

Figs. 6a - 6c show flow diagrams of an example of a method 600 of an authorization key sharing flow. Fig. 6a shows an example of an authorization key sharing flow in which a sharer 610a (e.g., a device as described with reference to fig. 3), an (account) database 620a (e.g., a trusted authority as described with reference to fig. 2, such like a device OEM) and a sharee 630 (e.g., a user equipment, e.g., a smartphone) are involved.

Prior to starting an authorization key generation by transmitting an invitation signal, the sharer 610a may request information about a sharee 630 to which the sharer 610a wishes to direct the authorization key. This way, the sharer 630 can receive information from the database 620a about an intended sharee 630. In 640 the sharer 610a may transmit a request for identification information of a secure element of the sharee 630 to the database 620a. The request may comprise data indicative of a or may be a getAccountIdHash. User data of the secure element of the sharee 630 which could be requested by the request may be determined by a user binding as described above. For example, requested data may comprise information indicative for an email-address of the user, a telephone number of the user, an id-card number of the user, a public key of the sharee 630, a specific use case, a vehicle OEM). The database 620a may response to the request by transmitting in 650 an identification signal comprising information indicative of the identification information to the sharer 610a. The identification signal may comprise or may be an OnetimeAccountIdHash, nonce (to increase a privacy) or a InstanceCACert, e.g., AccountIDHash. For example, the OnetimeAccountIdHash = hash(AccountIdHash, nonce), where AccountIdHash = hash(userAccountId, vehicle OEM = a vehicle manufacturer). The identification information may comprise at least one of an identifier of the secure element (e.g., a public key of a key pair (comprising also a private key) generated by the secure element) or a user binding information. Thus, the sharer 610a may receive identification information from the database 620a which can be used to improve an authorization key signation.

In 660 an invitation signal is transmitted to the sharee 630 from the sharer 610a according to [1]. Further, in 665 an authorization key creation is performed, e.g., the sharee generates an authorization key, e.g. a digital key, according to [1]. In 670 the sharee 630 transmits a key signing request according to [1] to the sharer 610a.

In 675 the sharer 610a may check whether the information about the secure element matches the identification information received from the database 620. For example, the sharer may check if hash(accountIdHash, nonce) from instanceCA matches OnetimeAccountIdHash. If both matches the sharer 610 may proceed as usual, e.g., sign the generated authorization key from the sharee 630, else the sharer 610 may not sign the authorization key and may end the key generation flow without singing a generated authorization key. Thus, by using the identification information provided by the database 620a for verifying the information about the secure element a signature of the generated authorization key (e.g., the digital key) can be improved. If the identification information matches the information about the secure element the generated authorization key may be indicated as valid, e.g., a signature may be performed by the sharer 610a. This way, the sharer can compare a secure element which has generated the authorization with an intended secure element the invitation signal was addressed to by using the identification information received from the database 620a.

In 680 a MailboxImportRequest is transmitted to the sharee 630 from the sharer 610a according to [1].

Fig. 6b shows another example of an authorization key sharing flow in which a sharer 610b (e.g., a backend, e.g., of a car sharing provider), an (account) database 620 (e.g., a trusted authority as described with reference to fig. 2, such like device operation system (OS)), a sharee 630 (e.g., a user equipment, e.g., a smartphone) and a user equipment 635 comprising a storage device with a stored car sharing app are involved. In contrast to fig. 6a the request for identification information is in 640 transmitted from the smartphone of the user to the device OS 620b. The device OS 620b may have a storage medium in which a database, e.g., a look-up-table is stored comprising information about secure elements and users bounded to the secure elements. For example, the device OS may have received the database from a trusted authority as described with reference to fig. 2 and thus may act as a trusted authority, e.g., based on a whitelist.

Thus, the device OS 620 may transmit in 650 an identification signal comprising information indicative of the identification information to the user equipment 635. The user equipment 635 may forward in 655 identification information to the sharer 620b. This way, the sharer 620b, e.g., the backend 620b, may be enabled to check whether the information about the secure element matches the identification information received from the database. Thus, user binding for digital key deployment by third party apps installed on the user equipment 635 of a sharer, e.g. car sharing apps, can utilize the identification information, e.g., generated by a trusted authority.

In contrast to fig. 6a as can be seen in fig. 6c further a relay 632 and a key management server 634 are involved. In 651 the sharer 630 transmits a requestKey (comprising e.g., OnetimeAccountIdHash, nonce) to the key management server 634. The key management server 634 may relay in 652 this request to a relay 632 and may receive in 653 a requestKey response signal from the relay 632. In 654 the key management server 634 transmits the requestKey response to the sharer. The sharer 610 sends in 660 an invitation signal to the sharee 630 and in 670 the key signing request is transmitted from the sharee 630 to the key management server 634. In 675 key management server 634 may check whether the information about the secure element matches the identification information received from the database 620 and in 680 a MailboxImportRequest is transmitted to the sharee 630 from the key management server 634 according to [1]. Thus, the check for signing the generated authorization key can be performed by the key management server 634 instead of the sharer 610.

More details and aspects are mentioned in connection with the embodiments described above and/or below. The example shown in Fig. 6 may comprise one or more optional additional features corresponding to one or more aspects mentioned in connection with the proposed concept or one or more examples described above (e.g., Fig. 1 - 5) and/or below (e.g., Fig. 7 - 18).

Fig. 7 shows an example of a method 100. The method 100 for improving an authorization process comprises transmitting 110 a request for identification information of a secure element to a database and receiving 120, from the database, an identification signal comprising information indicative of the identification information. The identification information may comprise at least one of an identifier of the secure element (e.g., a public key of a key pair (comprising also a private key) generated by the secure element) or a user binding information. Further, the method 100 comprises receiving 130, from the secure element, a key signing request comprising information about a secure element used to generate an authorization key and comparing 140 the secure element information with the identification information. For example, the method 100 may be performed by a device as described with reference to fig. 3.

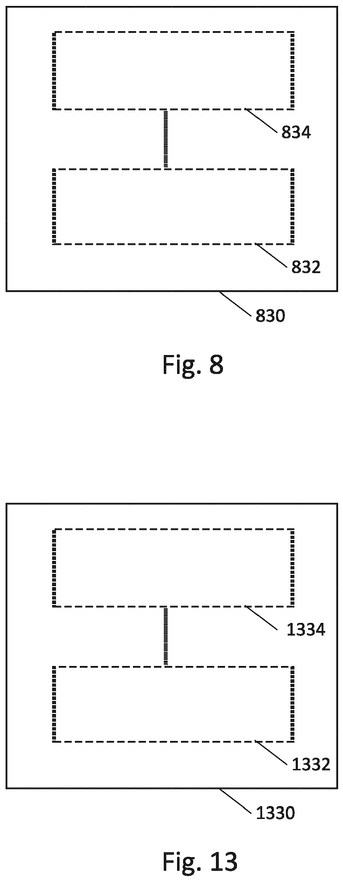

More details and aspects are mentioned in connection with the embodiments described above and/or below. The example shown in Fig. 7 may comprise one or more optional additional features corresponding to one or more aspects mentioned in connection with the proposed concept or one or more examples described above (e.g., Fig. 1 - 6) and/or below (e.g., Fig. 8 - 18).

Fig. 8 shows an example of a block diagram of an eligibility server 830. The eligibility server 830 for improving an authorization process comprises interface circuitry 832 configured to communicate with user equipment, a database and a device and processing circuitry 834 configured to control the interface circuitry 832. Further, the processing circuitry is configured to receive, from the device, a signal indicative of account identification information (e.g., a key request). Further, the processing circuitry 834 is configured to receive, from the user equipment, a key signing request comprising data indicative of an instance certificate authority of the user equipment and an endpoint certificate of the user equipment. The instance certificate authority comprises data indictive of a user binding. Further, the processing circuitry 834 is configured to transmit a verification request to the database for verifying the identity of the user equipment. This way, the eligibility server 830 can check whether the endpoint was created on the user equipment of the intended recipient.. For this, the account binding may mean that a user equipment is identified to belong to a respective identity of entities. Thus, by the instance CA certificate and the account identification information a secure sharing can be performed.

In an example, the account identification information may comprise data indicative of at least one of a phone number or an email address. This way, the eligibility server 830 can receive data from the sharer which may be easily accessible for the sharer, e.g., stored on the sharer. Thus, a further connection between the sharer and a database can be omitted.

In an example, the processing circuitry 834 may be further configured to receive from the database a return message comprising data indicative of a success or an error of a verification of the identification of the user equipment. This way, the eligibility device 830 can receive information about a verification of the key signing request of the sharee.

As shown in Fig. 8 the respective interface circuitry 832 is coupled to the respective processing circuitry 834 at the eligibility server 830. In examples the processing circuitry 834 may be implemented using one or more processing units, one or more processing devices, any means for processing, such as a processor, a computer or a programmable hardware component being operable with accordingly adapted software. Similar, the described functions of the processing circuitry 834 may as well be implemented in software, which is then executed on one or more programmable hardware components. Such hardware components may comprise a general-purpose processor, a Digital Signal Processor (DSP), a micro-controller, etc. The processing circuitry 834 is capable of controlling the interface circuitry 832, so that any data transfer that occurs over the interface circuitry 832 and/or any interaction in which the interface circuitry 832 may be involved may be controlled by the processing circuitry 834.

In an embodiment the eligibility server 830 may comprise a memory and at least one processing circuitry 834 operably coupled to the memory and configured to perform the below mentioned method.

In examples the interface circuitry 832 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 832 may be wireless or wireline and it may be configured to communicate, e.g., transmit or receive signals, information with further internal or external components.

The eligibility server 830 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

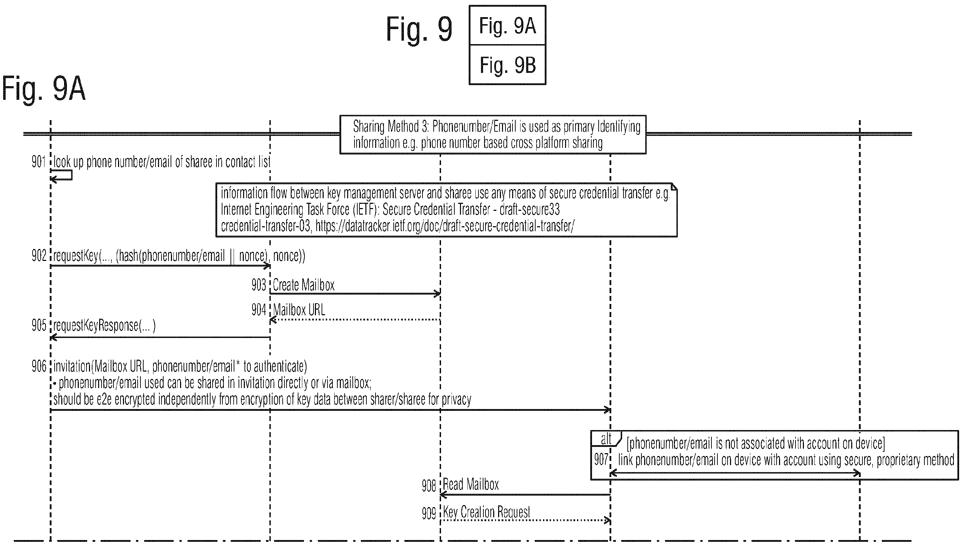

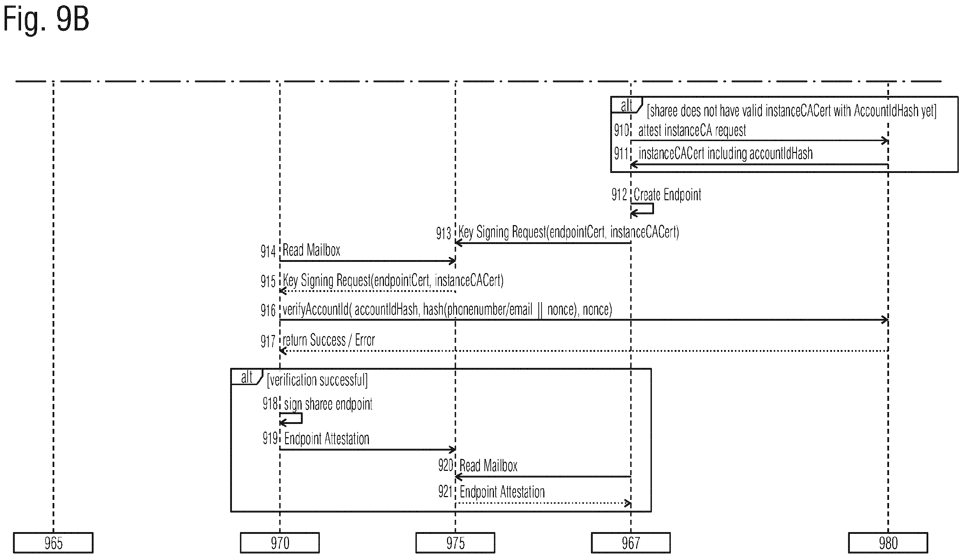

More details and aspects are mentioned in connection with the embodiments described above and/or below. The example shown in Fig. 8 may comprise one or more optional additional features corresponding to one or more aspects mentioned in connection with the proposed concept or one or more examples described above (e.g., Fig. 1 - 18) and/or below (e.g., Fig. 9 - 18).

Fig. 9 shows an example of a flow diagram of a secure sharing using account binding.

The eligibility server 970 may trust the sharer 965, e.g. the key pair of the sharer 965. For example, a trust relationship between the eligibility server 970 and the sharer 965 may be established prior to the secure sharing.

Further, the eligibility server 970 may trust the database 980, e.g., the device OEM 980, e.g., the key pair of the device OEM 980. For example, a trust relationship between the eligibility server 970 and the device OEM 980 may be established prior to the secure sharing.

For example, account binding may mean that a user equipment is identified to belong to a respective identity of entities. As described above this may be performed by performing a user binding comprising a secure element of the user equipment. Alternatively, the user binding can also be performed by use of a public key infrastructure (PKI). For example, the PKI can be an arrangement that binds a public key of the user equipment with the respective identity of identities. For example the user binding may be performed by a device OEM. Alternatively the user binding can be based on every kind of access authority.

Data indicative of the user binding, e.g., an OnetimeAccountIdHash or an AccountIDHash can be included into an instance certificate authority certificate of the user equipment. This instance CA certificate can be utilized to verify that a key signing request was received from an intended user equipment of a key sharing flow. The information of the user binding, e.g., the instance CA certificate comprising data indicative of the user binding, can be attested by the authority which has performed the user binding, e.g., a device OEM 980. For example, the device OEM CA may be used to sign the instance CA certificate used during the secure sharing. Thus, if the eligibility server 970 trust the device OEM 980, especially the device OEM CA, the device OEM 980 can attest an identity of the sharee 967. This may allow a secured credential transfer by utilizing the user binding information stored in the instance CA certificate which is used during the secure sharing flow.

The instance CA certificate can then be used to attest an endpoint created for the specific secure sharing, e.g., by the sharee 967, e.g., by generating an endpoint certificate. The key signing request may comprise the instance CA certificate and the endpoint certificate.

The flow of secure sharing, e.g., a key sharing, in Fig. 8 may comprise a sharer 965, a sharee 967 (the user equipment), an eligibility server 970, a relay 975 and a database 980. The prove of a correct recipient of a secure sharing flow can be proven by using information known by the sharer about the recipient, e.g., the user equipment 967. The sharee may verify that the known information is correct, verify the information und a check whether the certificate used to verify the information can be performed by transmitting a request to the database 980, e.g., a device OEM. This way, the eligibility server can prove the identity of the sharee by receiving information about the known information and the key signing request comprising an instance certificate authority of the user equipment and an endpoint certificate of the user equipment, wherein the instance certificate authority comprises information about a user binding.

In 901 the sharer 965 may look up/select an account identification information of the sharee 967, e.g., a phone number, an email address. The sharer 965 may use a database stored in a storage device of the sharer 965, e.g., a contact list, a messenger app.

In 902 a key request may be transmitted from the sharer 965 to the eligibility server 970. The key request may comprise the data indicative of the account identification information. For example, the key request may comprise an anonymized account identification information. For example, the account identification information can be anonymized by hashing and incorporating a once.

The flow of 903 and 904 without account identification information may be described in the Internet Engineering Task Force (IETF), especially the credential secured transfer. Thus, the flow of 903 and 904 may be similar to the IETF and differs in that the account identification information is further comprised by the flow. In 903 the eligibility server may initiate a creation of a mailbox, which is accessible via the relay 975. The mailbox may be used to store data indicative of a key generation, e.g., configuration data of a digital key (symbolized in Fig. 9 by ... in 902 and 905). The relay 975 may transmit to the eligibility server 970 a mailbox URL in 904.

In 905 the sharer may receive from the eligibility server 970 a key request response comprising data indicative of the mailbox URL and the key generation.

In 906 the sharer 965 may transmit an invitation signal to the sharee 970. The invitation signal may comprise data indicative of the mailbox URL and optional the (selected) account identification information. The invitation signal can be transmitted via a mobile communication network, e.g., via SMS, email, a messenger application. If the invitation signal is transmitted via a service, which is not correlated to the account identification information (for example the phone number may be used and the invitation signal may be transmitted via email or a messenger application) the invitation signal may further comprise account identification information. The account identification information could by instead of transmitting via the invitation signal stored in the mailbox. Optionally, the account identification information should be e2e encrypted independently from encryption of key data between sharer 965 and 970 for privacy. This way, the account identification information need not be known to the eligibility server 980.

The sharee 967 may check whether the account identification information is associated with an account of the user of the sharee 967 known to the database 980, e.g., the device OEM. If the account identification information is not associated with the account of the user the account identification information may be associated in 907 to the account of the user (e.g., by use of a onetime password).

In 908 the sharee 967 may access the mailbox via the relay 975 and may receive in 909 a key creation request from the relay 975. If the sharee 967 has not yet a valid instance CA certificate with data indicative of the user binding the sharee 967 may transmit an instance CA attest request to the device OEM 980 in 910 and may receive in 911 an instance CA certificate comprising the data indicative of the user binding, e.g., an accountIdHash.

In 912 an authorization key creation may be performed, e.g., the sharee generates an authorization key.

In step 913 the sharee may transmit to the relay 975 a key singing request. The key singing request may comprise data indicative of the instance CA certificate and the endpoint certificate, which was signed by use of the instance CA (such that a certification chain is generated).

In 914 the eligibility server 970 may transmit a read mailbox to the relay 975. In 915 the eligibility server may receive from the relay the key signing request.

In 916 the eligibility server 970 may transmit a verification request to the database 980 for verifying the identity of the user equipment. The verification request may comprise data indicative of the user binding, e.g., the accountIDHash, and the account identification information (e.g., phone number e.g., by hashing and incorporating a once). Thus, the device OEM 980 may receive all needed data to verify the identity of the sharee 967.

By incorporating the account identification information into the secure sharing flow the eligibility server 970 may be enabled to check if the invitation signal was received by the correct sharee. This way cross platform sharing can be enabled. A communication link between the sharer 965 and the database 980 can be omitted by using the account identification information for verifying the identity of the sharee 967 by the eligibility server 970.

This credential secured transfer can be used for any kind of providing an access for a sharee 967 by a sharer 965, e.g., to open a hotel door by a smart card, to allow a sharee to use bank account of the sharer 965, to transfer money between the sharer 965 and the sharee 967, to generate a digital key for a vehicle, to provide access to a smart home or functionalities of a smart home.

Thus, by using an account identification information known to the sharer 965, verifying the account identification information by the sharee 967 (by use of the instance CA certificate) and checking the verified account identification information a credential secured transfer may be enabled.

In 917 the eligibility server 970 may receive a return message comprising data indicative of a success or an error of the verification of the identification, e.g. the accountID, of the sharee 967. Optionally, if the eligibility server 970 does not receive the return message a verification can be assumed as successful or erroneous.

In 918 the eligibility server 970 may sign the sharee endpoint certificate if a verification of the sharee 967 was successful. In 19 the eligibility server 970 may transmit an endpoint certificate attestation to the relay 975. In 920 the sharee 920 may read the mailbox of the relay 975. In 921 the sharee 967 may receive the endpoint certificate attestation.

For example, the user equipment may be a User Terminal (UT) or User Equipment (UE) within the meaning of the respective communication standards being used for mobile communication. For example, the user equipment may be a mobile phone, such as a smartphone, or another type of mobile communication device, such as a smartwatch, a laptop computer, a tablet computer, or autonomous augmented-reality glasses. Alternatively, the user equipment may be smartcard.

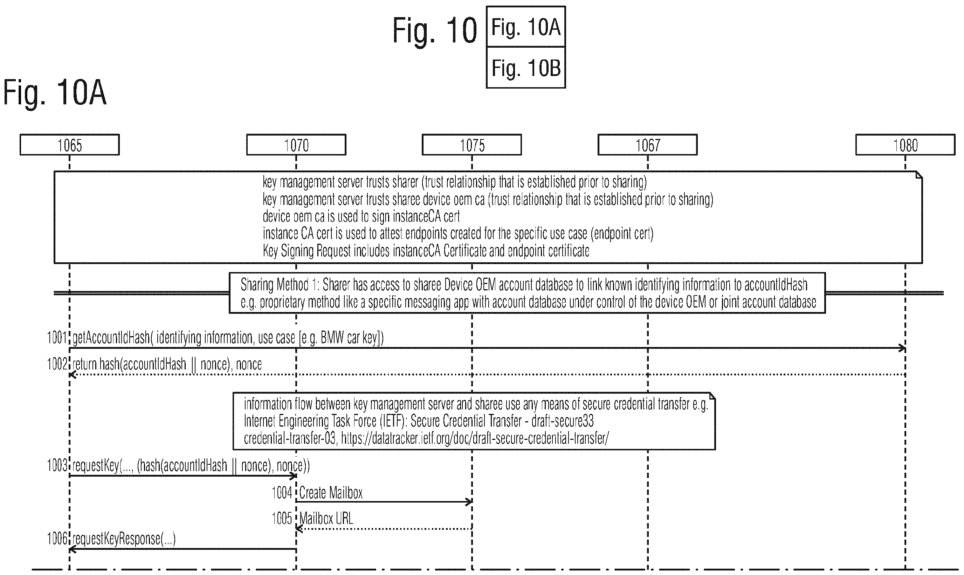

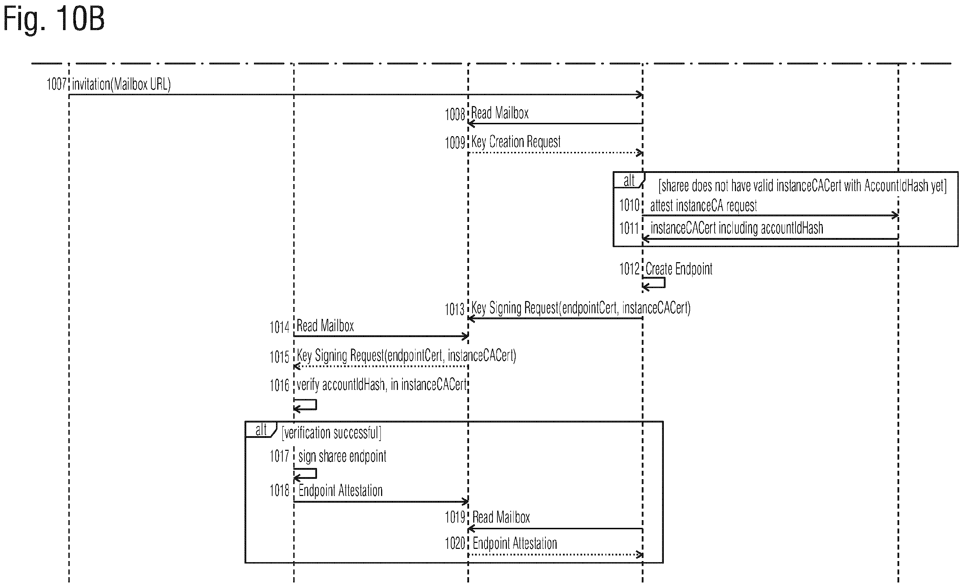

More details and aspects are mentioned in connection with the embodiments described above and/or below. The example shown in Fig. 9 may comprise one or more optional additional features corresponding to one or more aspects mentioned in connection with the proposed concept or one or more examples described above (e.g., Fig. 1 - 8) and/or below (e.g., Fig. 10 - 18).

Fig. 10 shows another example of a flow diagram of a secure sharing using account binding. Fig. 10 shows an example of a secure sharing flow in which a sharer 1065 (e.g. a device), a database 1080 a sharee 1067 (e.g., a user equipment), an eligibility server 1070 and a relay 1075 may be involved.

The eligibility server 1070 may trust the sharer 1065. For example, a trust relationship between the eligibility server 1070 and the sharer 1065 may be established prior to the secure sharing.

Further, the eligibility server 1070 may trust the database 1080, e.g., the device OEM 1080. For example, a trust relationship between the eligibility server 1070 and the device OEM 1080 may be established prior to the secure sharing. Further, as described above (e.g., in Fig. 9) the instance CA certificate and the endpoint certificate may be used to ensure a secure sharing.

In contrast to Fig. 9 the sharer 1065 may have access to the database 1080, e.g., the device OEM 1080, to request account identifying information (e.g., by transmitting identifying information) and receive account identification information (e.g., linked to the identifying information). In this case, the secure share flow can be similar to the key sharing flow described with reference to Figs. 6a-6c, especially with reference to Fig. 6c.

In 1001 the sharer 1065 may transmit a request for account identification information of a sharee 1070 to the database 1080. The request may comprise data indicative of a or may be a getAccountIdHash comprising identifying information. In contrast to Figs. 6 the requested account identification information is not restricted to a secure element of the sharee 1067. As described with reference to Fig. 9 the account identification information can be a, e.g., PKI, an access authority.

The database 1080 may response to the request by transmitting in 1002 an identification signal comprising information indicative of the account identification information to the sharer 1065. The identification signal may comprise or may be an OnetimeAccountIdHash, nonce (to increase a privacy) or a InstanceCACert, e.g., AccountIDHash. For example, the OnetimeAccountIdHash = hash(AccountIdHash, nonce), where AccountIdHash = hash(userAccountId, vehicleOEM = a vehicle manufacturer). The account identification information may comprise data indicative of user binding, e.g., for a secure element, a PKI, an access authority. Thus, the sharer 1065 may receive account identification information from the database 1080 which can be used to verify a recipient of an invitation signal.

In 1003 a key request may be transmitted from the sharer 1065 to the eligibility server 1070. The key request may comprise the data indicative of the account identification information comprising data indicative of the user binding. Thus, the eligibility server 1070 may receive the to verify the account identification information received from the sharee 1067 during the secure sharing by the sharer 1065 (in contrast to Fig. 9, where the database performs a verification step).

1004, 1005, 1006 and 1007 may be identical to 903, 904, 905, 906 in Fig. 6, respectively. Further, 1008, 1009, 1010, 1011, 1012, 1013, 1014 and 1015 may be identical to 908, 909, 910, 911, 912, 913, 914 and 915, respectively.

In contrast to Fig. 9 and comparable to Figs. 6 the eligibility server 1070 may verify the account identification information without a need to connect to the database 1080, since needed data to perform a check of the key signing request was already received from the sharer 1065.

1017, 1018, 1019 and 1020 may be identical to 918, 919, 920, 921 in Fig. 9.

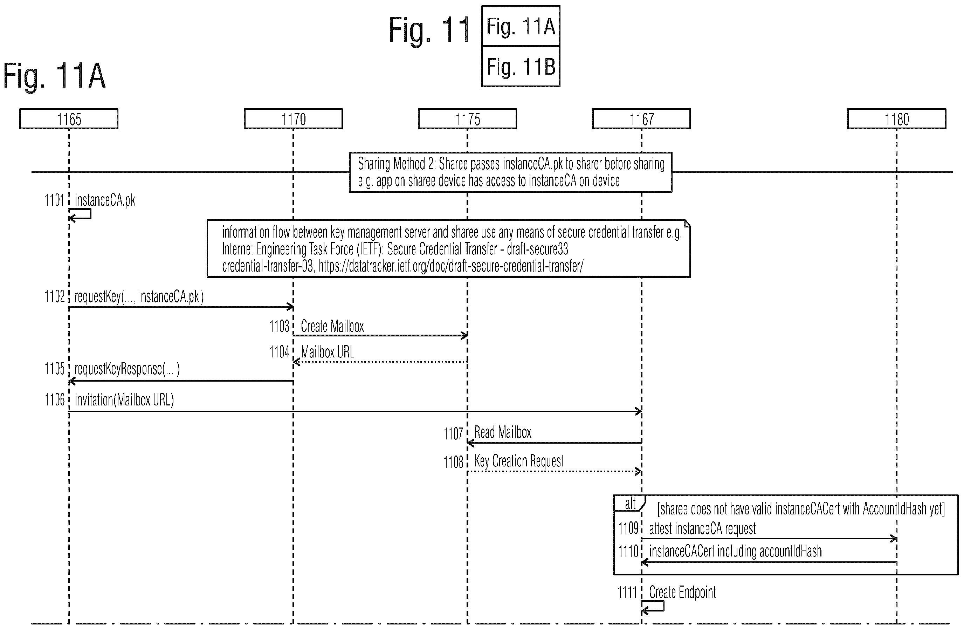

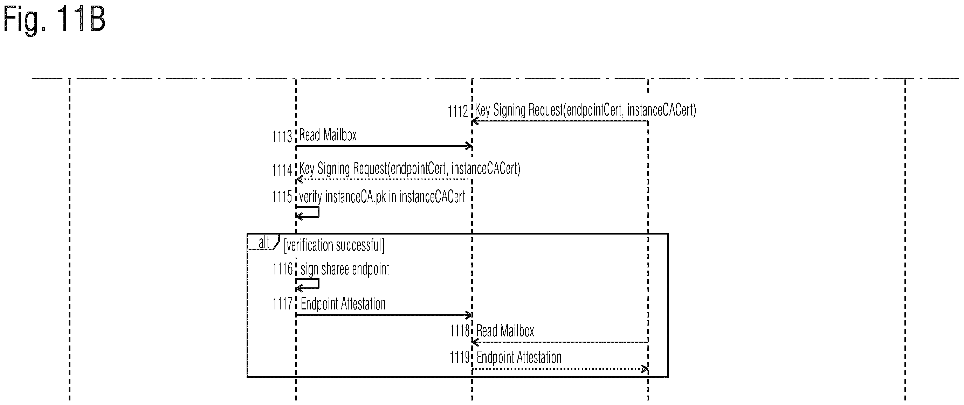

More details and aspects are mentioned in connection with the embodiments described above and/or below. The example shown in Fig. 10 may comprise one or more optional additional features corresponding to one or more aspects mentioned in connection with the proposed concept or one or more examples described above (e.g., Fig. 1 - 9) and/or below (e.g., Fig. 11 - 18).

Fig. 11 shows another example of a flow diagram of a secure sharing using account binding. Fig. 11 shows an example of a secure sharing flow in which a sharer 1165 (e.g. a device), a database 1180 a sharee 1167 (e.g., a user equipment), an eligibility server 1170 and a relay 1175 may be involved. In contrast to Fig 10, in 1101 the sharer 1165 may receive from the sharee 1170 an instanceCA.pk comprising data indicative of the public key of the sharee 1167. This instanceCA.pk may be transmitted in 1102 to the eligibility server 1170. Thus the eligibility server 1170 can use the instanceCA.pk in 1115 to verify the intanceCA.ok in the certificate chain comprising the instance CA certificate received from the sharee 1167.

1103-1114 may be identical to 1004-1015 in Fig. 10, respectively. Also 1116, 1117, 1118 and 1119 may be identical to 1017, 1018, 1019 and 1020 in Fig. 10.

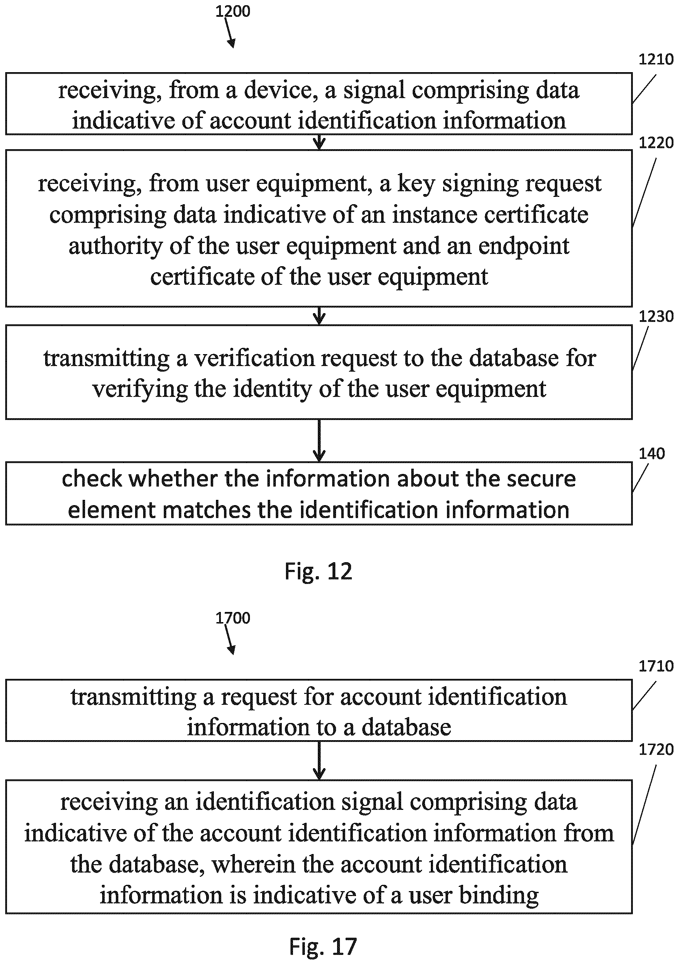

More details and aspects are mentioned in connection with the embodiments described above and/or below. The example shown in Fig. 11 may comprise one or more optional additional features corresponding to one or more aspects mentioned in connection with the proposed concept or one or more examples described above (e.g., Fig. 1 - 10) and/or below (e.g., Fig. 12 - 18).

Fig. 12 shows a method (for secure sharing) 1200 comprising receiving 1210, from a device, a signal comprising data indicative of account identification information, receiving 1220, from user equipment, a key signing request comprising data indicative of an instance certificate authority of the user equipment and an endpoint certificate of the user equipment. The instance certificate authority comprises data indictive of a user binding. Further, the method 1200 comprises transmitting 1230 a verification request to the database for verifying the identity of the user equipment. The method may be performed by an eligibility server as described above, e.g., with reference to Fig. 8.

In an example, the method may further comprise receiving, from the database, a return message comprising data indicative of a success or an error of a verification of the identification of the user equipment. This way, an acknowledgement of the verification request can be received.

More details and aspects are mentioned in connection with the embodiments described above and/or below. The example shown in Fig. 12 may comprise one or more optional additional features corresponding to one or more aspects mentioned in connection with the proposed concept or one or more examples described above (e.g., Fig. 1- 11) and/or below (e.g., Fig. 13 - 18).

Fig. 13 shows another example of a block diagram of a device 1330. The device 1330 for improving an authorization process comprises interface circuitry 1332 configured to communicate with a database and processing circuitry 1334 configured to control the interface circuitry 1332. Further, the processing circuitry 1334 is configured to transmit a request for account identification information to the database and to receive an identification signal comprising data indicative of the account identification information from the database, wherein the account identification information is indicative of a user binding. This way, the device can receive data needed for a secure share, e.g., to transmit the data to the eligibility server as described with reference to Fig. 8.

In an example, the processing circuitry 1334 may be further configured to transmit, to an eligibility server, a signal comprising data indicative of the account identification information. This way, the device 1330 can provide necessary data for signing an authorization key from a sharee.

As shown in Fig. 13 the respective interface circuitry 1332 is coupled to the respective processing circuitry 1334 at the device 1330. In examples the processing circuitry 1334 may be implemented using one or more processing units, one or more processing devices, any means for processing, such as a processor, a computer or a programmable hardware component being operable with accordingly adapted software. Similar, the described functions of the processing circuitry 1334 may as well be implemented in software, which is then executed on one or more programmable hardware components. Such hardware components may comprise a general-purpose processor, a Digital Signal Processor (DSP), a micro-controller, etc. The processing circuitry 1334 is capable of controlling the interface circuitry 1332, so that any data transfer that occurs over the interface circuitry 1332 and/or any interaction in which the interface circuitry 1332 may be involved may be controlled by the processing circuitry 1334.

In an embodiment the device 1330 may comprise a memory and at least one processing circuitry 1334 operably coupled to the memory and configured to perform the below mentioned method.

In examples the interface circuitry 1332 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 1332 may be wireless or wireline and it may be configured to communicate, e.g., transmit or receive signals, information with further internal or external components.

The device 1330 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

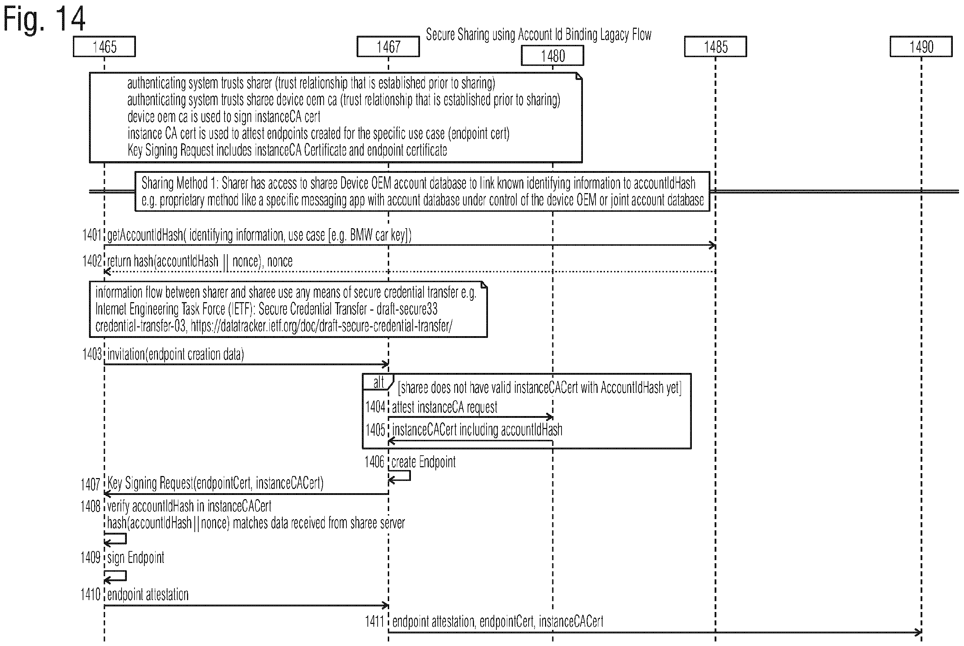

More details and aspects are mentioned in connection with the embodiments described above and/or below. The example shown in Fig. 13 may comprise one or more optional additional features corresponding to one or more aspects mentioned in connection with the proposed concept or one or more examples described above (e.g., Fig. 1 - 12) and/or below (e.g., Fig. 14 - 18).

Fig. 14 shows an example of a secure sharing without an eligibility server. Fig. 14 shows an example of a secure sharing flow in which a sharer 1465 (e.g. a device), a database 1480 a sharee 1467 (e.g., a user equipment) an authenticating system 1490 may be involved.

The authentication server 1490 may trust the sharer 1465. For example, a trust relationship between the authentication server 1490 and the sharer 1465 may be established prior to the secure sharing.

Further, the authentication server 1490may trust the database 1480, e.g., the (sharee) device OEM 1480. For example, a trust relationship between the authentication server 1490 and the (sharee) device OEM 1480 may be established prior to the secure sharing. Further, as described above (e.g., in Fig. 9) the instance CA certificate and the endpoint certificate may be used to ensure a secure sharing.

In contrast to Fig. 9-11 the key may be generated by the sharee 1467. Further, the key may be configured by the sharer 1465. For example, a key generation may be merely performed by the sharer 1465 and the sharee 1467. In 11 the endpoint attestation and instance CA certificate may be verified by the authenticating system 1090, e.g., a hotel door, a vehicle OEM.

In 1401 the sharer 1465 may transmit a request for account identification information of a sharee 1470 to the database 1480. The request may comprise data indicative of a or may be a getAccountIdHash comprising identifying information. In contrast to Figs. 6 the requested account identification information is not restricted to a secure element of the sharee 1467. As described with reference to Fig. 9 the account identification information can be a, e.g., PKI, an access authority.

The database 1480 may response to the request by transmitting in 1402 an identification signal comprising information indicative of the account identification information to the sharer 1465. The identification signal may comprise or may be an OnetimeAccountIdHash, nonce (to increase a privacy) or a InstanceCACert, e.g., AccountIDHash. For example, the OnetimeAccountIdHash = hash(AccountIdHash, nonce), where AccountIdHash = hash(userAccountId, vehicleOEM = a vehicle manufacturer). The account identification information may comprise data indicative of user binding, e.g., for a secure element, a PKI, an access authority. Thus, the sharer 1465 may receive account identification information from the database 1480 which can be used to verify a recipient of an invitation signal.

In 1403 the sharer 105 may transmit an invitation signal comprising data indicative of an endpoint creation to the sharee 1467. 1404 and 1405 may be analog as described above (e.g., 910 and 911 in Fig. 9). In the 6 the sharee 1467 may create an endpoint.

In 1407 the sharee 1467 may transmit a key signing request to the sharer 1465. The key signing request may comprise the instance CA certificate and the endpoint certificate. In 1408 the key signing request can be verified by the sharer 1465. In 1409 the endpoint certificate can be signed by the sharer 1465. In 1410 an endpoint attestation may be transmitted to the sharee 1467. In 1411 a signal indicative of the endpoint attestation and the instance CA certificate may be transmitted to the authentication server 1490.

Since the authentication server 1490 trusts the sharer, e.g., the endpoint attestation, and the device OEM 1480, e.g., the instance CA certificate, the authentication server 1490 can verify a key received from the sharee 1467.

For example, the sharee 1467 may transmit the signal comprising data indicative of a generated key signed with the endpoint certificate, the endpoint attestation and the instance CA certificate. The authentication server 1090 may then check if the key was signed with the endpoint certificate, if the endpoint certificate was certified by the sharer certificate (endpoint attestation) and if the instance CA certificate was certified by the device OEM 1480. Thus, the authentication server 1490 may trust the sharee 1467 for future use.

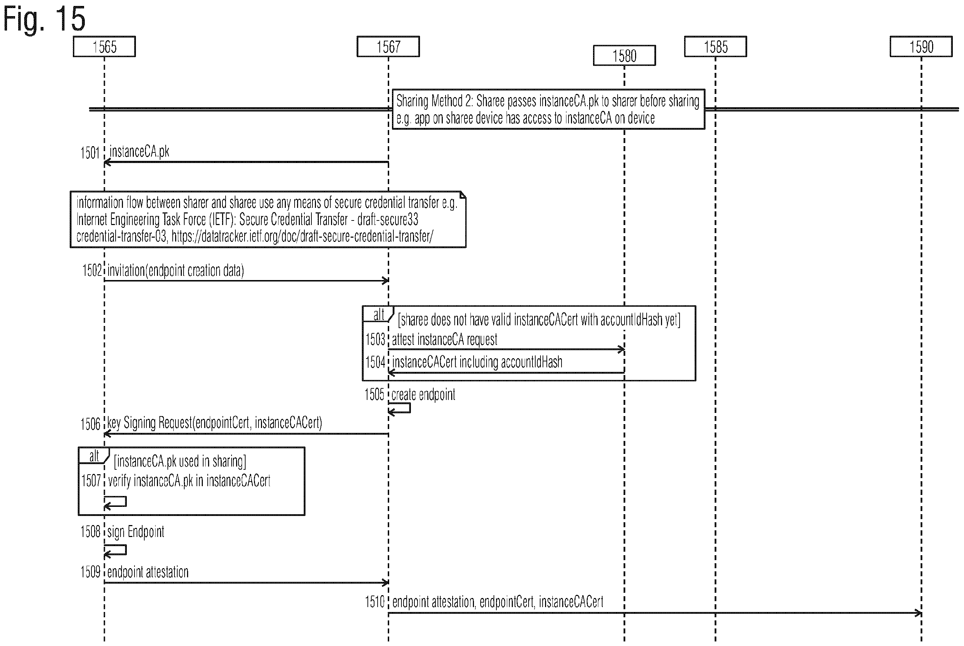

More details and aspects are mentioned in connection with the embodiments described above and/or below. The example shown in Fig. 14 may comprise one or more optional additional features corresponding to one or more aspects mentioned in connection with the proposed concept or one or more examples described above (e.g., Fig. 1 - 13) and/or below (e.g., Fig. 15 - 18).

Fig. 15 shows another example of a secure sharing without an eligibility server. Fig. 15 shows an example of a secure sharing flow in which a sharer 1565 (e.g. a device), a database 1580 a sharee 1567 (e.g., a user equipment) an authenticating system 1590 may be involved.

The secure sharing may be analog to Fig. 14 and only differs in the account identification information. As described above with reference to Fig. 11 a instanceCA.pk can be used for verification. Thus, in 1501 the sharer 1565 may receive an intanceCA.pk from the sharee 1567 instead of requesting and receiving an accountIdHash as described with reference to Fig. 14.

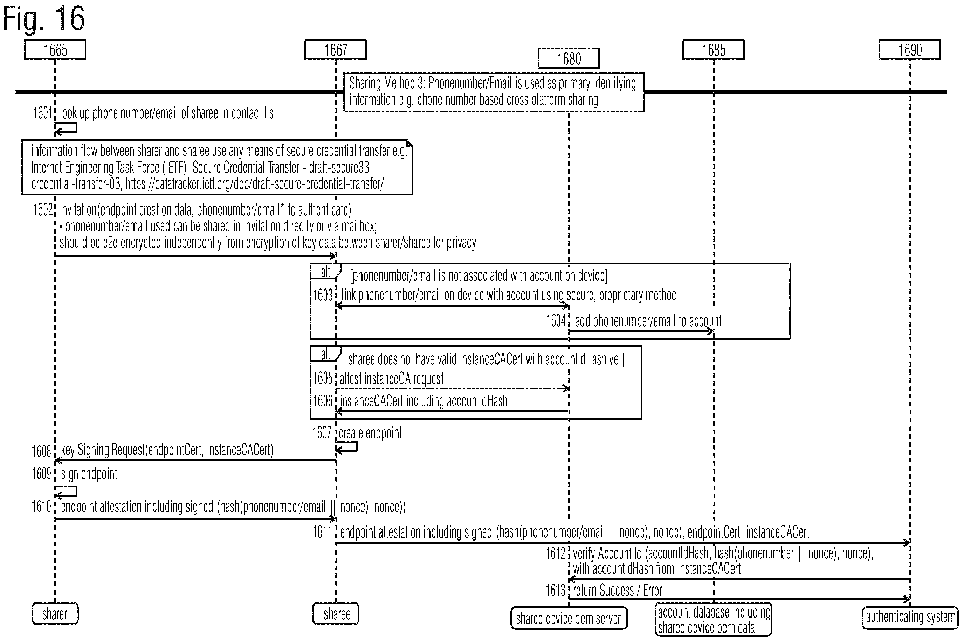

More details and aspects are mentioned in connection with the embodiments described above and/or below. The example shown in Fig. 15 may comprise one or more optional additional features corresponding to one or more aspects mentioned in connection with the proposed concept or one or more examples described above (e.g., Fig. 1 - 14) and/or below (e.g., Fig. 16 - 18).

Fig. 16 shows another example of a secure sharing without an eligibility server. Fig. 16 shows an example of a secure sharing flow in which a sharer 1665 (e.g. a device), a database 1680 a sharee 1667 (e.g., a user equipment) an authenticating system 1690 may be involved.

Comparable to Fig. 9 an account identification information stored on the sharer 1565 may be used for verification.

In 1601 the sharer 1665 may look up/select an account identification information of the sharee 1667, e.g., a phone number, an email address. The sharer 1665 may use a database stored in a storage device of the sharer 1665, e.g., a contact list, a messenger app.

In 1602 a key request may be transmitted from the sharer 1665 to the sharee 1667. The key request may comprise the data indicative of the account identification information and endpoint creation data. For example, the key request may comprise an anonymized account identification information. For example, the account identification information can be anonymized by hashing and incorporating a once.

For example, in 1602 the sharer 1665 may transmit an invitation signal to the sharee 1670. The invitation signal may comprise data indicative of the account identification information and endpoint creation data.

The sharee 1667 may check whether the account identification information is associated with an account of the user of the sharee 1667 known to the database 1680, e.g., the device OEM. If the account identification information is not associated with the account of the user the account identification information may be associated in 1603 to the account of the user (e.g., by use of a onetime password).

If the sharee 1667 has not yet a valid instance CA certificate with data indicative of the user binding the sharee 1667 may transmit an instance CA attest request to the device OEM 1680 in 1605 and may receive in 1606 an instance CA certificate comprising the data indicative of the user binding, e.g., an accountIdHash.

In 1610 a signal comprising data indicative of an endpoint attestation may be transmitted to the sharee 1667. In contrast to Fig. 14 or 15 the data may further be indicative of the account identification information, since the sharer 1665 could not perform a verification of the sharee 16667. For example, the data may be signed with the secure key of the sharer 1665 such that the sharee 1667 cannot change the signed account identification information. In 1611 a signal indicative of the endpoint attestation, the instance CA certificate and the account identification information may be transmitted to the authentication server 1690.

The authentication server 1690 may transmit a request to an account database 1685 (which may be comprised by the device OEM 1680 or may be separated from the device OEM 1680, e.g., may be a different entity). In 1613 the authentication server 1690 may receive data indicative of a success or an error of a verification of the generated key. This way, the authentication server 1690 can received data about the verification of the sharee 1667.

More details and aspects are mentioned in connection with the embodiments described above and/or below. The example shown in Fig. 16 may comprise one or more optional additional features corresponding to one or more aspects mentioned in connection with the proposed concept or one or more examples described above (e.g., Fig. 1 - 15) and/or below (e.g., Fig. 17- 18).

Fig. 17 shows a method 1700 (for secure sharing). The method 1700 comprises transmitting 1710 a request for account identification information to a database and receiving 1720 an identification signal comprising data indicative of the account identification information from the database. The account identification information is indicative of a user binding. The method may be performed by a device as described above, e.g., with reference to Fig. 13.

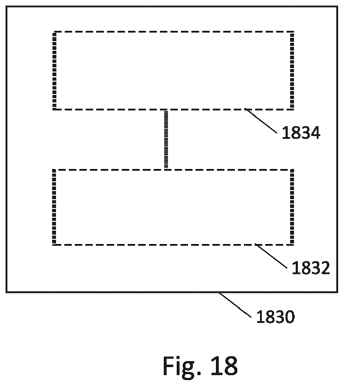

More details and aspects are mentioned in connection with the embodiments described above and/or below. The example shown in Fig. 17 may comprise one or more optional additional features corresponding to one or more aspects mentioned in connection with the proposed concept or one or more examples described above (e.g., Fig. 1 - 16) and/or below (e.g., Fig. 18).

Fig. 18 shows an example of block diagram of an authentication device 1830 for improving an authorization process. The authentication device 1830 comprises interface circuitry 1832 configured to communicate with a database and a user equipment and processing circuitry 1834 configured to control the interface circuitry 1832. Further, the processing circuitry is configured to receive an endpoint attestation signal comprising data indicative of an account identification information signed by a sharer and to transmit a verification request to the database.

More details and aspects are mentioned in connection with the embodiments described. The example shown in Fig. 18 may comprise one or more optional additional features corresponding to one or more aspects mentioned in connection with the proposed concept or one or more examples described above (e.g., Fig. 1 - 17).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### References

10 trusted authority
12 interface circuitry
14 processing circuitry
30 secure element
32 interface circuitry
34 processing circuitry
50 device
52 interface circuitry
54 processing circuitry
70 backend
72 interface circuitry
74 processing circuitry
90 key management system
92 interface circuitry
94 processing circuitry
610, 610a, 610b sharer
630 sharee
640 request AccountIdHash
650 receive OnetimeAccountIdHash, nonce or AccountIDHash
651 transmitting a requestKey
652 relaying the requestKey
653 transmitting a requestKey response signal
654 relaying the requestKey response signal
655 forward identification information
660 transmitting invitation signal
665 authorization key creation
670 transmitting key signing request
675 check whether the information about the secure element matches the identification information
680 transmit MailboxImportRequest
830 eligibility server
832 interface circuitry
834 processing circuitry
965, 1065, 1165, 1465, 1565, 1665 sharer
967, 1067, 1167, 1467, 1567, 1667 sharee
970, 1070, 1170, eligibility server
975, 1975, 1175, relay
980, 1080, 1180, 1480, 1580, 1680 database
1200 method
1210 receiving, from a device, a signal comprising data indicative of account identification information
1220 receiving, from user equipment, a key signing request
1230 transmitting a verification request to the database
1330 device
1332 interface circuitry
1334 processing circuitry
1485, 1585, 1685 account database
1490, 1590, 1690 authenticating system
1700 method
1710 transmitting a request for account identification information to a database
1720 receiving an identification signal
1830 authentication server
1832 interface circuitry
1834 processing circuitry

## Claims

1. An eligibility server (830; 970) for improving an authorization process; comprising interface circuitry (832) configured to communicate with user equipment (967), a database (980) and
a device; and
processing circuitry (834) configured to control the interface circuitry (832) and to:
receive, from the device, a signal comprising data indicative of account identification information;
receive, from the user equipment (967), a key signing request comprising data indicative of an instance certificate authority of the user equipment (967) and an endpoint certificate of the user equipment (967), wherein the instance certificate authority comprises data indictive of a user binding; and
transmit a verification request to the database (980) for verifying the identity of the user equipment (967).

2. The eligibility server (830; 970) according to claim 1, wherein
the account identification information comprises data indicative of at least one of a phone number or an email address.

3. The eligibility server (830; 970) according to claim 1 or 2, wherein
the processing circuitry (834) is further configured to receive from the database (980) a return message comprising data indicative of a success or an error of a verification of the identification of the user equipment (967).

4. A method (1200), comprising:
receiving (1210), from a device, a signal comprising data indicative of account identification information;
receiving (1220), from user equipment, a key signing request comprising data indicative of an instance certificate authority of the user equipment and an endpoint certificate of the user equipment, wherein the instance certificate authority comprises data indictive of a user binding; and
transmitting (1230) a verification request to the database for verifying the identity of the user equipment.

5. The method (1200) according to claim 4, further comprising
receiving, from the database, a return message comprising data indicative of a success or an error of a verification of the identification of the user equipment.

6. A device (1330) for improving an authorization process, comprising;
interface circuitry (1332) configured to communicate with a database (980); and
processing circuitry (1334) configured to control the interface circuitry (1332) and to:
transmit a request for account identification information to the database (980); and
receive an identification signal comprising data indicative of the account identification information from the database (980), wherein the account identification information is indicative of a user binding.

7. The device (1330) according to claim 6, wherein
the processing circuitry (1332) is further configured to
transmit, to an eligibility server (830; 970), a signal comprising data indicative of the account identification information.

8. A method (1700), comprising:
transmitting (1710) a request for account identification information to a database (980); and
receiving (1720) an identification signal comprising data indicative of the account identification information from the database (980), wherein the account identification information is indicative of a user binding.

9. Authentication device (1830) for improving an authorization process, comprising;
interface circuitry (1832) configured to communicate with a database (980) and a user equipment (967); and
processing circuitry (1834) configured to control the interface circuitry (1832) and to:
receive an endpoint attestation signal comprising data indicative of an account identification information signed by a sharer; and
transmit a verification request to the database (980).

10. A computer program having a program code for performing the method (1200; 1700) according to claim 4, 5 or 8, when the computer program is executed on a computer, a processor, or a programmable hardware component.
